# EUROPEAN PATENT APPLICATION

(11) **EP 2 754 903 A1**
(43) Date of publication of application: **16.07.2014**
(21) Application number: 14151070.1
(22) Date of filing: 14.01.2014
(51) Int. Cl.: F16C 19/00

(54) **Bearing for wind turbine generator**

(30) Priority: 15.01.2013 JP 2013004499
(71) Applicant: JTEKT CORPORATION, Osaka-shi Osaka 542-8502 (JP); Parker Processing Co., Ltd., Chuo-ku, Tokyo 103-0027 (JP)
(72) Inventor: Kobayashi, Yasuhiro, Osaka-shi,, Osaka 542-8502 (JP); Koyanagi, Takahiro, Tokyo,, Tokyo 103-0027 (JP); Izumi, Masahide, Tokyo,, Tokyo 103-0027 (JP)
(74) Representative: Winter, Brandl, Fürniss, Hübner, Röss, Kaiser, Polte - Partnerschaft

(57) **Abstract**

A roller (32) includes a main body portion made of metal, and a black oxide film (70) which covers a surface of the main body portion and has a rolling surface. A thickness of the black oxide film (70) is equal to or larger than 0.5 µm and equal to or smaller than 2 µm and a coefficient of static friction of the black oxide film (70) is equal to or larger than 0.2 and equal to or smaller than 0.3.

## Description

### BACKGROUND OF THE INVENTION

### 1. Field of the Invention

The invention relates to a bearing for a wind turbine generator.

### 2. Description of Related Art

As a conventional bearing, there is a bearing described in Japanese Patent Application Publication No. 2005-195097 (JP 2005-195097 A). This bearing is used in a speed increaser of a wind turbine generator. Specifically, the speed increaser of the wind turbine generator includes a planet gear unit and a secondary speed increasing unit, and is configured such that the speed of the rotation of a sun gear of the planet gear unit is increased by the secondary speed increasing unit and then the rotation, whose speed has been increased, is transmitted to an output shaft. The bearing supports the output shaft that rotates at a high speed so that the output shaft is rotatable with respect to a casing.

The inventors of this invention have found that the following problem may occur in a case where the above-described conventional bearing is a roller bearing.

That is, in the wind turbine generator, since the strength of wind varies from hour to hour, a case where power is transmitted to a shaft supported by the roller bearing and a case where power is not transmitted to the shaft may occur. For example, when wind stops suddenly from a state where strong wind is being blown, power which has been supplied to the speed increaser is interrupted instantaneously. Therefore, a sudden rotation fluctuation occurs, and thus, a force may act due to the inertia of the speed increaser so that the speed increaser rotates a wind turbine, instead of the wind turbine rotating the speed increaser as in the usual case. As a result, a load acting on the roller bearing may be inverted.

Therefore, in this case, the load is not applied temporarily to the roller bearing, and thus a roller easily slips, whereby a lubricating film of a rolling surface of the roller is lost and smearing that is a slight seizure occurs in the rolling surface of the roller and the raceway surface of a bearing ring.

In view of the above, the inventors of this application have found the following problem. That is, when a black oxide film is formed on a rolling surface of a roller by performing treatment for forming the black oxide film on the surface of the roller, protruding portions of the film are preferentially abraded particularly at the initial stage of rotation, and thus it is possible to suppress oil film discontinuation. That is, it is possible to increase the coefficient of static friction of the rolling surface of the roller, and thus it is possible to suppress slipping of the roller and to suppress smearing of the roller bearing.

However, in the bearing in which the black oxide film is formed on the surface of the roller, since the surface of the black oxide film has many protruding portions and the black oxide film is a soft film, contact portions are engaged, and the coefficient of static friction of the rolling surface of the roller increases, and thus the starting torque of the roller bearing increases.

### SUMMARY OF THE INVENTION

The invention provides a bearing for a wind turbine generator, in which slipping of a roller can be suppressed, smearing can be suppressed, and starting torque of the roller can be reduced.

A bearing for a wind turbine generator according to an aspect of the invention includes an outer ring having an inner peripheral raceway surface; an inner ring which is disposed on a rotary shaft of the wind turbine generator and has an outer peripheral raceway surface; and a roller which is disposed between the inner peripheral raceway surface of the outer ring and the outer peripheral raceway surface of the inner ring, wherein the roller includes a main body portion made of metal, and a black oxide film which covers a surface of the main body portion and has a rolling surface, and wherein a thickness of the black oxide film is equal to or larger than 0.5 µm and equal to or smaller than 2 µm and a coefficient of static friction of the black oxide film is equal to or larger than 0.2 and equal to or smaller than 0.3.

According to the above-described aspect of the invention, since the surface of the main body portion of the roller is covered with the black oxide film having a thickness equal to or larger than 0.5 µm and equal to or smaller than 2 µm, and thus, a rolling surface of the roller is constituted by the black oxide film which is softer than a known material constituting the roller, the grip force of the rolling surface of the roller can be increased. Therefore, it is possible to suppress occurrence of slipping of the roller in a case where a load is not applied to the roller, and to suppress occurrence of smearing in the bearing.

Further, according to the above-described aspect of the invention, since the coefficient of static friction of the black oxide film is equal to or larger than 0.2 and equal to or smaller than 0.3, a frictional force which is generated by the black oxide film does not increase excessively. Therefore, the coefficient of friction at the initial stage of rotation can be reduced, and thus the starting torque of the roller bearing can be reduced.

In the aspect described above, the thickness of the black oxide film may be equal to or larger than 1 µm and equal to or smaller than 2 µm and the coefficient of static friction of the black oxide film may be equal to or larger than 0.25 and equal to or smaller than 0.3.

In the case described above, since the thickness of the black oxide film is equal to or larger than 1 µm and the coefficient of static friction of the black oxide film is larger than 0.25, occurrence of smearing can be greatly suppressed.

In the aspect described above, when arithmetic mean roughness of the black oxide film is represented by a µm and arithmetic mean roughness of the surface of the main body portion is represented by b µm, a relationship of 0.85b≤a≤1.15b may be satisfied.

The arithmetic mean roughness of the black oxide film which can be formed on the main body portion of the roller depends on the arithmetic mean roughness of the surface of the main body portion of the roller.

In the case described above, since the arithmetic mean roughness of the black oxide film is substantially the same as the arithmetic mean roughness of the surface of the main body portion of the roller, it is possible to realize the roller whose grip force is superior to that of the main body portion, and whose coefficient of static friction is substantially the same as that of the main body portion. Therefore, it is possible to suppress smearing of the cylindrical roller, and it is also possible to reduce the starting torque of the cylindrical roller bearing.

In the aspect described above, the roller may be formed by applying a coating of black oxide to the main body portion and then performing buffing.

In the case described above, since the roller is formed by applying a coating of black oxide to the main body portion, and then performing buffing, it is possible to preferentially remove only protruding portions among protruding portions and recessed portions formed in the rolling surface of the roller due to the coating of black oxide. Therefore, it is possible to easily form the roller in which the thickness of the black oxide film constituting the rolling surface is equal to or larger than 0.5 µm and equal to or smaller than 2 µm and the coefficient of static friction of the black oxide film is equal to or larger than 0.2 and equal to or smaller than 0.3.

According to the above-described aspect of the invention, it is possible to realize the bearing for a wind turbine generator, in which the slipping of the roller can be suppressed, smearing can be suppressed, and the starting torque of the roller can be reduced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a broken side view of a speed increaser of a wind turbine generator according to an embodiment of the invention;
FIG. 2 is a schematic sectional view in an axial direction, which shows a second cylindrical roller bearing of the speed increaser;
FIG. 3 is a diagram showing the surface roughness of a cylindrical roller before black oxide treatment;
FIG. 4 is a diagram showing the surface roughness of the cylindrical roller after the black oxide treatment; and
FIG. 5 is a diagram showing the surface roughness of the cylindrical roller after buffing is further performed on the cylindrical roller after the black oxide treatment.

### DETAILED DESCRIPTION OF EMBODIMENTS

Hereinafter, an embodiment of the invention will be described in detail with reference to the drawings.

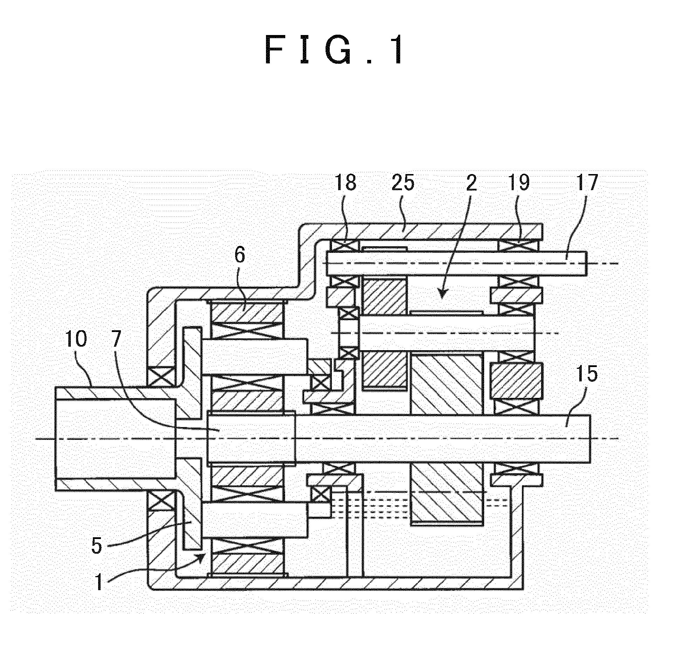

FIG. 1 is a broken side view of a speed increaser of a wind turbine generator according to the embodiment of the invention.

The speed increaser includes a planet gear unit 1 and a secondary speed increasing unit 2, and the planet gear unit 1 includes a carrier 5, a plurality of planet gears 6, and a sun gear 7. The speed increaser is configured such that when an input shaft 10 rotates, the carrier 5 integrated with the input shaft 10 rotates and the planet gears 6 supported at a plurality of locations of the carrier 5 perform orbital motion. Each of the planet gears 6 performs orbital motion while meshing with a fixed ring gear and as a result, each of the planet gears 6 rotates around its axis.

The sun gear 7 meshes with the planet gears 6. The sun gear 7 rotates at a rotation speed increased with respect to the rotation speed of the input shaft 10. The sun gear 7 is provided at a low-speed shaft 15 of the secondary speed increasing unit 2. The secondary speed increasing unit 2 increases the speed of rotation of the sun gear 7 and outputs the rotation whose speed has been increased. The rotation speed of an output shaft 17 of the secondary speed increasing unit 2 is significantly increased to about 100 times the rotation speed of the input shaft 10 (increased to about 1500 rpm in a case of 50 Hz and about 1800 rpm in a case of 60 Hz) in two stages by the planet gear unit 1 and the secondary speed increasing unit 2. In this way, even in a case where a wind turbine rotates at a very low speed due to the state of wind, a high-speed rotation, by which electric power can be generated, is obtained from the output shaft 17.

The secondary speed increasing unit 2 includes a first cylindrical roller bearing 18 and a second cylindrical roller bearing 19. The first cylindrical roller bearing 18 and the second cylindrical roller bearing 19 support the output shaft 17 so that the output shaft 17 is rotatable with respect to a casing 25 of the speed increaser.

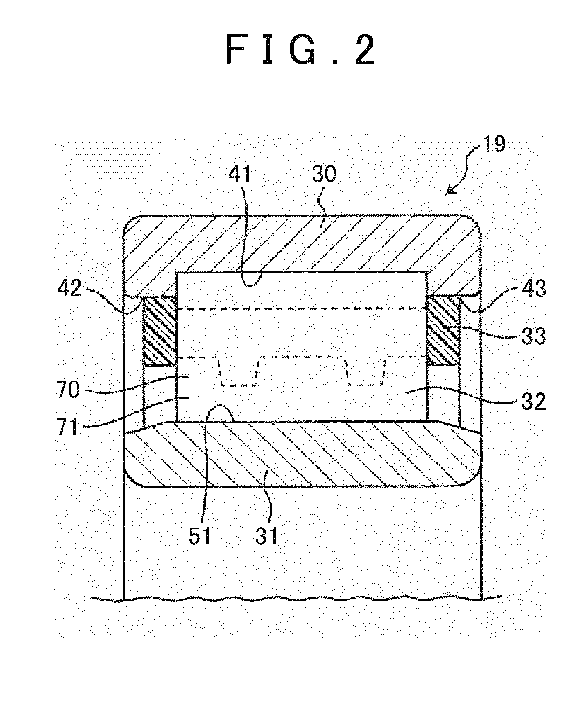

FIG. 2 is a schematic sectional view in an axial direction, which shows the second cylindrical roller bearing 19.

As shown in FIG. 2, the second cylindrical roller bearing 19 (hereinafter simply referred to as "cylindrical roller bearing") includes an outer ring 30, an inner ring 31, and a plurality of cylindrical rollers 32. The outer ring 30 is fitted and fixed to the inner peripheral surface of the casing 25. The outer ring 30 has an inner peripheral cylindrical raceway surface 41, a first rib portion 42, and a second rib portion 43. The first rib portion 42 is located at one side of the inner peripheral cylindrical raceway surface 41 in the axial direction and the second rib portion 43 is located at the other side of the inner peripheral cylindrical raceway surface 41 in the axial direction.

On the other hand, the inner ring 31 is fitted and fixed to the outer peripheral surface of the output shaft 17. The inner ring 31 has an outer peripheral cylindrical raceway surface 51. The cylindrical rollers 32 are spaced apart from each other in a circumferential direction, and are located between the outer peripheral cylindrical raceway surface 51 of the inner ring 31 and the inner peripheral cylindrical raceway surface 41 of the outer ring 30 in a state in which the cylindrical rollers 32 are retained by a cage 33.

The cylindrical roller 32 has a main body portion made of metal, and a black oxide film (Fe₃O₄ film) 70. The main body portion is made of a steel material known as a material of the cylindrical roller, such as SUJ2, SAE5120, a material obtained by performing heat treatment on these steel materials, or S45C. The main body portion has a cylindrical shape.

Further, the black oxide film 70 covers the entire outer surface of the main body portion. The outer surface of the black oxide film 70 includes a rolling surface 71 of the cylindrical roller 32. The thickness of the black oxide film 70 is equal to or larger than 0.5 µm and equal to or smaller than 2 µm, and the coefficient of static friction of the black oxide film 70 is equal to or larger than 0.2 and equal to or smaller than 0.3.

The black oxide film 70 can be formed by the following method. That is, first, the main body portion is immersed in a sodium hydroxide solution at about 150°C, which has a concentration appropriately changed according to a material or the like of the main body portion. Thus, a black oxide film before polishing treatment is formed on the surface of the main body portion (hereinafter, this treatment is referred to as blackening treatment).

Thereafter, buffing or shot peening is performed on the black oxide film before polishing treatment, whereby the black oxide film 70 is formed. By using the buffing or the shot peening, only protruding portions of the surface can be removed while the film thickness of the black oxide film is maintained, and accordingly the coefficient of static friction can be reduced. Thus, the black oxide film 70 is formed.

Specifically, the buffing is performed under the following conditions.

First, as a member for performing buffing, a brush, a woven fabric, or a non-woven fabric is used, more specifically, animal fiber, plant-based fiber, chemical fiber, a metal brush (a brass or iron scrubbing brush), or the like is used. Further, as a processing method, a rotation or a strike is used, and as a load, a constant load (for example, in a range of 50 g-weight to 50 kg-weight) is used, and the buffing is performed by pressing the member for performing the buffing against a workpiece or striking a workpiece with the member for performing the buffing. Further, at this time, the brush, the woven fabric, the non-woven fabric, or the workpiece is rotated or reciprocated (for example, in a range of 1 r/min to 3000 r/min). Further, the buffing is performed in a state where a lubricant is not used or an abrasive or an oil and fat content is present.

Next, the shot peening is performed under the following conditions.

First, as a particle which is used, a metal particle, a ceramics-based (Si₃N₄, SiC, Al₂O₃, or the like) particle, a resin-based (melamine, acrylic resin, or the like) particle, or a plant-based (walnut or the like) particle having a diameter of, for example, about 1 mm is used. Further, as a method, a strike using particles is performed.

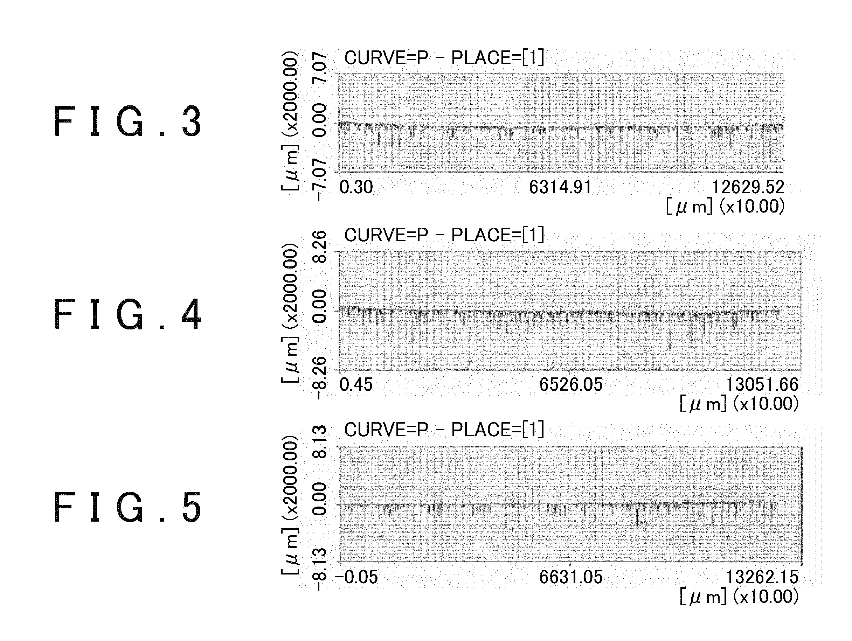

FIGS. 3, 4, and 5 are diagrams showing variation in the surface roughness of a cylindrical roller during processing in an experimental example.

Specifically, FIG. 3 is a diagram showing the surface roughness of the cylindrical roller before black oxide treatment, FIG. 4 is a diagram showing the surface roughness of the cylindrical roller after the black oxide treatment, and FIG. 5 is a diagram showing the surface roughness of the cylindrical roller after buffing is further performed on the cylindrical roller after the black oxide treatment. In this experimental example, in three states shown in FIGS. 3 to 5, the film thickness of the back oxide film is in a range of 1.5 µm to 1.6 µm and does not change.

As shown in FIGS. 3 to 5, the surface roughness of the cylindrical roller increases due to the black oxide treatment. However, when the buffing is performed thereafter, the surface roughness becomes substantially the same as that before the black oxide treatment.

Specifically, in the state shown in FIG. 3, the arithmetic mean roughness Ra of the surface of the cylindrical roller is 0.23 µm, the maximum height roughness Ry is 2.72 µm, and the ten-point mean roughness Rz is 2.19 µm.

Further, in the state shown in FIG. 4, the arithmetic mean roughness Ra of the surface of the cylindrical roller is 0.27 µm, the maximum height roughness Ry is 3.60 µm, and the ten-point mean roughness Rz is 2.61 µm.

Further, in the state shown in FIG. 5, the arithmetic mean roughness Ra of the surface of the cylindrical roller is 0.20 µm, the maximum height roughness Ry is 2.76 µm, and the ten-point mean roughness Rz is 2.09 µm.

That is, the arithmetic mean roughness Ra increases to 0.27 µm after the black oxide treatment, as compared to 0.23 µm in the state before the treatment. However, when the buffing is performed thereafter, the arithmetic mean roughness Ra becomes 0.20 µm which is smaller than that in the state before the treatment.

Further, the maximum height roughness Ry significantly increases to 3.60 µm after the black oxide treatment, as compared to 2.72 µm in the state before the treatment. However, when the buffing is performed thereafter, the maximum height roughness Ry becomes 2.76 µm which is substantially the same as that in the state before the treatment.

Further, the ten-point mean roughness Rz significantly increases to 2.61 µm after the black oxide treatment, as compared to 2.19 µm in the state before the treatment. However, when the buffing is performed thereafter, the ten-point mean roughness Rz becomes 2.09 µm which is smaller than that in the state before the treatment.

Therefore, when the buffing is performed after the black oxide treatment, the surface roughness of the cylindrical roller becomes substantially the same as the surface roughness of the main body portion before the black oxide treatment.

In addition, the inventors of this invention have confirmed, through a test, the fact that when a black oxide film having a film thickness equal to or larger than 0.5 µm and a coefficient of static friction equal to or larger than 0.2 is formed, a grip can be obtained and thus the black oxide film is effective in reducing smearing. Further, the inventors of this invention have confirmed the fact that when the film thickness is made equal to or smaller than 2 µm and the coefficient of static friction is made equal to or smaller than 0.3, excessive starting torque is not generated. In addition, it has been confirmed, through the test, that when the film thickness of the black oxide film is made equal to or larger than 1 µm and the coefficient of static friction is made equal to or larger than 0.25, occurrence of smearing can be greatly suppressed.

According to the embodiment described above, since the surface of the main body portion of the cylindrical roller 32 is covered with the black oxide film 70 having a thickness equal to or larger than 0.5 µm and equal to or smaller than 2 µm and thus the rolling surface of the cylindrical roller 32 is constituted by the black oxide film 70 that is softer than a known material constituting the cylindrical roller 32, the grip force of the rolling surface of the cylindrical roller 32 can be increased. Therefore, it is possible to suppress occurrence of slipping of the cylindrical roller 32 in a case where a load is not applied to the cylindrical roller 32, and thus it is possible to suppress occurrence of smearing in the raceway surfaces 41 and 51 of the cylindrical roller bearing and the rolling surface of the cylindrical roller 32. In addition, it is possible to reduce transmission loss at the initial stage of rotation.

Further, according to the embodiment described above, since the coefficient of static friction of the black oxide film 70 is equal to or larger than 0.2 and equal to or smaller than 0.3, a frictional force generated by the black oxide film 70 at the initial stage of rotation does not increase excessively. Therefore, the coefficient of friction at the initial stage of rotation of the cylindrical roller 32 can be reduced, and thus the starting torque of the roller bearing can be reduced and energy loss during electric power generation can be reduced.

Further, according to the embodiment described above, since the arithmetic mean roughness Ra of the main body portion is 0.23 µm and the arithmetic mean roughness Ra of the black oxide film 70 is 0.20 µm, when the arithmetic mean roughness Ra of the black oxide film 70 is represented by a (µm) and the arithmetic mean roughness Ra of the surface of the main body portion is represented by b (µm), the relationship of 0.85b≤a≤1.15b is satisfied. Therefore, since the arithmetic mean roughness of the black oxide film 70 is substantially the same as the arithmetic mean roughness of the surface of the main body portion of the cylindrical roller 32, it is possible to realize the roller whose grip force is superior to that of the main body portion, and whose coefficient of static friction is substantially the same as that of the main body portion. Therefore, it is possible to suppress smearing of the cylindrical roller 32, and it is also possible to reduce the starting torque of the cylindrical roller bearing.

Further, according to the embodiment described above, since the cylindrical roller 32 is formed by applying a coating of black oxide to the main body portion, and then performing buffing, it is possible to easily and selectively remove protruding portions among protruding portions and recessed portions of the black oxide film after the black oxide treatment. Therefore, it is possible to easily form the cylindrical roller 32 in which the thickness of the black oxide film 70 constituting the rolling surface is equal to or larger than 0.5 µm and equal to or smaller than 2 µm and the coefficient of static friction of the black oxide film 70 is equal to or larger than 0.2 and equal to or smaller than 0.3.

In the invention, after the blackening treatment, the protruding portions of the surface may be selectively removed by performing known polishing other than the buffing, for example, by performing belt polishing, brush polishing, or blast polishing.

Further, in the embodiment described above, the cylindrical roller 32 is formed by performing the blackening treatment and the buffing. However, in the invention, the black oxide treatment and the buffing may be performed on at least one of the outer ring and the inner ring, in addition to the cylindrical roller. Thus, the black oxide film, which can prevent smearing, reduce the coefficient of friction at the initial stage of the rotation of the cylindrical roller, and reduce the starting torque, may be formed on the raceway surface of at least one of the outer ring and the inner ring.

Further, in the embodiment described above, the cylindrical roller bearing is disposed on a high-speed shaft of the speed increaser of the wind turbine generator. However, the cylindrical roller bearing according to the invention may be disposed on a rotary shaft of a wind turbine of the wind turbine generator and may also be disposed on an intermediate-speed shaft of the speed increaser.

Further, in the embodiment described above, a roller bearing is a cylindrical roller bearing and a rolling element is a cylindrical roller. However, in the invention, the roller bearing may be a tapered roller bearing and the rolling element may be a tapered roller. Further, in the invention, the roller bearing may be a spherical roller bearing and the rolling element may be a convex roller (a spherical roller). It is known that the convex roller is likely to slip. Therefore, when the invention is applied to the spherical roller bearing, it is possible to obtain a large advantageous effect.

## Claims

1. A bearing for a wind turbine generator **characterized by** comprising:
an outer ring (30) having an inner peripheral raceway surface (41);
an inner ring (31) which is disposed on a rotary shaft of the wind turbine generator and has an outer peripheral raceway surface (51); and
a roller (32) which is disposed between the inner peripheral raceway surface (41) of the outer ring (30) and the outer peripheral raceway surface (51) of the inner ring (31),
wherein the roller (32) includes a main body portion made of metal, and a black oxide film (70) which covers a surface of the main body portion and has a rolling surface, and
wherein a thickness of the black oxide film (70) is equal to or larger than 0.5 µm and equal to or smaller than 2 µm and a coefficient of static friction of the black oxide film (70) is equal to or larger than 0.2 and equal to or smaller than 0.3.

2. The bearing for a wind turbine generator according to claim 1, wherein the thickness of the black oxide film (70) is equal to or larger than 1 µm and equal to or smaller than 2 µm and the coefficient of static friction of the black oxide film (70) is equal to or larger than 0.25 and equal to or smaller than 0.3.

3. The bearing for a wind turbine generator according to claim 1 or 2, wherein arithmetic mean roughness of the black oxide film (70) is represented by a µm and arithmetic mean roughness of the surface of the main body portion is represented by b µm, a relationship of 0.85b≤a≤1.15b is satisfied.

4. The bearing for a wind turbine generator according to any one of claims 1 to 3, wherein the roller (32) is formed by applying a coating of black oxide to the main body portion and then performing buffing.
